# EUROPEAN PATENT SPECIFICATION

(11) **EP 3 306 213 B1**
(45) Date of publication and mention of the grant of the patent: **01.03.2023**
(21) Application number: 15894293.8
(22) Date of filing: 30.10.2015
(51) Int. Cl.: F24F 7/08, F24F 13/22, F24F 12/00, F24F 13/28, F24F 13/20, F24F 13/30

(54) **HEAT EXCHANGE-TYPE VENTILATION DEVICE**
BELÜFTUNGSVORRICHTUNG VOM WÄRMEAUSTAUSCHTYP
DISPOSITIF DE VENTILATION DE TYPE À ÉCHANGE DE CHALEUR

(30) Priority: 29.05.2015 WO PCT/JP2015/065677; 29.05.2015 WO PCT/JP2015/065678; 29.05.2015 WO PCT/JP2015/065679
(43) Date of publication of application: 11.04.2018
(73) Proprietor: Mitsubishi Electric Corporation, Chiyoda-ku Tokyo 100-8310 (JP)
(72) Inventor: AOKI, Hiroki, Tokyo 100-8310 (JP); MIYAZAKI, Yuki, Tokyo 100-8310 (JP); IWATA, Koji, Tokyo 100-8310 (JP); FUJII, Yoshinori, Tokyo 102-0073 (JP); KATO, Shinya, Tokyo 102-0073 (JP)
(74) Representative: Mewburn Ellis LLP
(86) International application number: PCT/JP2015/080857
(87) International publication number: WO 2016/194261

(56) References cited:
- EP-A1- 2 426 426
- EP-A1- 2 657 621
- EP-B1- 2 657 621
- WO-A1-2010/125633
- DE-B4-102009 032 047
- JP-A- H0 749 187
- JP-A- H06 337 144
- JP-A- H09 196 576
- JP-A- 2011 075 118

## Description

### Field

The present invention relates to a heat-exchange type ventilation apparatus that provides ventilation while allowing heat exchange between a supply airflow and a discharge airflow.

### Background

It is conventional to use a heat-exchange type ventilation apparatus that includes a main body having a supply air path and a discharge air path formed therein and a heat exchanger placed inside the main body and that provides ventilation while allowing heat exchange between air passing through the supply air path and air passing through the discharge air path.

The heat exchanger used in such a heat-exchange type ventilation apparatus includes a heat exchange element that includes a plurality of heat exchange plates, which are sheet-like partition plates, stacked together with spacing therebetween. Patent Literature 1 discloses a heat exchange element having a cuboid shape due to the heat exchange plates each having a rectangular shape. In Patent Literature 1, the motor of each of an air supplying fan and an air discharging fan is covered with a casing composed of two split casings, i.e., first and second casings split in the rotation axis direction of the motor. The heat exchange element is sandwiched between a rib that protrudes from the first casing such that it is inclined to one side relative to the rotation axis direction and a rib that protrudes from the second casing such that it is inclined to one side relative to the rotation axis direction so as to be fixed. The heat exchanger is also fixed at other parts in the heat-exchange type ventilation apparatus.

### Citation List

### Patent Literature

Patent Literature 1: Japanese Patent Publication No. 5073098
Publication number EP 2426426 (A1) discloses a heat exchanging ventilator including an air supply fan, an exhaust fan, and a heat exchanger.

### Summary

### Technical Problem

After the heat-exchange type ventilation apparatus is installed on the ceiling of a building, parts to be maintained, such as motors, of the air supplying fan and the air discharging fan are regularly checked. In this case, after the bottom of the heat-exchange type ventilation apparatus is removed, the first or second casing that is located on the bottom side is removed. At this point in time, the fixing of the heat exchanger by the first and second casings is released. As heat-exchange type ventilation apparatuses become larger, the heat exchanger incorporated therein also becomes larger and heavier. Hence, when a motor of a large-size heat-exchange type ventilation apparatus is to be checked, the first or second casing that is located on the bottom side is removed while the heat exchanger is being held by hand, and then the motor is checked. However, considering the maintainability, it is required that the heat-exchange type ventilation apparatus be configured such that the parts to be maintained can be checked without holding the heat exchanger even if the ventilation apparatus is of a large size.

The present invention is made in view of the above, and an object thereof is to provide a heat-exchange type ventilation apparatus that can improve the maintainability of parts to be maintained of the air supplying fan and the air discharging fan.

### Solution to Problem

The present invention provides a heat-exchange type ventilation apparatus as set forth in claim 1.

### Advantageous Effects of Invention

The heat-exchange type ventilation apparatus according to the present invention produces the effect of being able to improve the maintainability of the parts to be maintained of the air supplying fan and the air discharging fan.

### Brief Description of Drawings

FIG. 1 is an exploded perspective view of a heat-exchange type ventilation apparatus according to a first embodiment of the present invention as viewed from the top surface side.
FIG. 2 is an exploded perspective view of the heat-exchange type ventilation apparatus according to the first embodiment as viewed from the bottom surface side.
FIG. 3 is a plan view of the heat-exchange type ventilation apparatus according to the first embodiment.
FIG. 4 is a cross-sectional view of the heat-exchange type ventilation apparatus according to the first embodiment as viewed from the side thereof.
FIG. 5 is a perspective view of a heat exchanger according to the first embodiment.
FIG. 6 is an exploded perspective view of the heat exchanger according to the first embodiment.
FIG. 7 is a partially enlarged cross-sectional view of a corner portion of the heat exchanger according to the first embodiment.
FIG. 8 is a partially enlarged cross-sectional view of a corner portion of the heat exchanger accommodated in a housing in the heat-exchange type ventilation apparatus according to the first embodiment.
FIG. 9 is a perspective view of a supply air filter frame included in a supply air filter and a discharge air filter frame included in a discharge air filter in the first embodiment.
FIG. 10 is a partially enlarged perspective view of the supply air filter frame in the first embodiment.
FIG. 11 is an exploded perspective view of an air supplying fan and an air discharging fan in the heat-exchange type ventilation apparatus according to the first embodiment.
FIG. 12 is a partially enlarged cross-sectional view of a portion D illustrated in FIG. 4.
FIG. 13 is a partially enlarged perspective view of the portion D illustrated in FIG. 4.
FIG. 14 is a perspective view of the heat-exchange type ventilation apparatus in the first embodiment, where a bottom plate, an inlet-side casing, and a motor casing are removed, as viewed from the bottom plate side.
FIG. 15 is a partially enlarged perspective view of a portion E illustrated in FIG. 14.
FIG. 16 is a partially enlarged cross-sectional view of the portion E illustrated in FIG. 14.
FIG. 17 is a perspective view illustrating a seat of the motor casing in the first embodiment.
FIG. 18 is a perspective view illustrating the state where a support is placed on the seat of the motor casing in the first embodiment.
FIG. 19 is a perspective view illustrating the state where the support of the motor casing in the first embodiment is placed in position to support the heat exchanger and is fixed with a screw.
FIG. 20 is a perspective view illustrating the state where the support of the motor casing in the first embodiment is placed in position not to support the heat exchanger and is fixed with the screw.
FIG. 21 is a perspective view of the heat-exchange type ventilation apparatus in the first embodiment, where the bottom plate is removed, as viewed from the bottom side.
FIG. 22 is a perspective view of the heat-exchange type ventilation apparatus in the first embodiment, where the bottom plate, the inlet-side casing, and the motor casing are removed, as viewed from the bottom side.
FIG. 23 is a perspective view of the heat-exchange type ventilation apparatus in the first embodiment, where the supporting of the heat exchanger by the support is released, as viewed from the bottom side.
FIG. 24 is a perspective view of the heat-exchange type ventilation apparatus in the first embodiment, where the bottom plate, the inlet-side casing, the motor casing, and the heat exchanger are removed, as viewed from the bottom side.

### Description of Embodiments

A heat-exchange type ventilation apparatus according to a first of the present invention will now be described in detail with reference to the drawings.

### First embodiment.

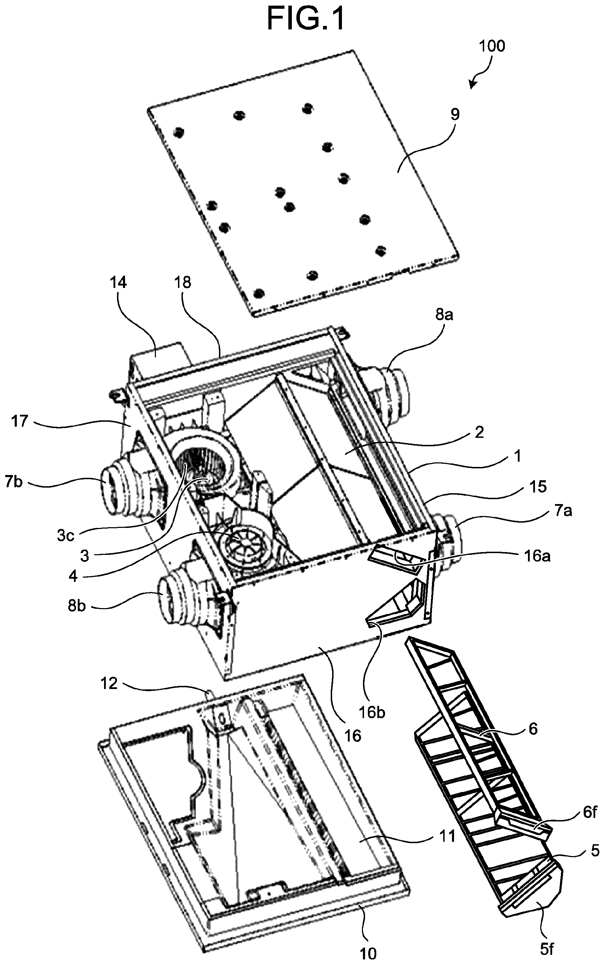

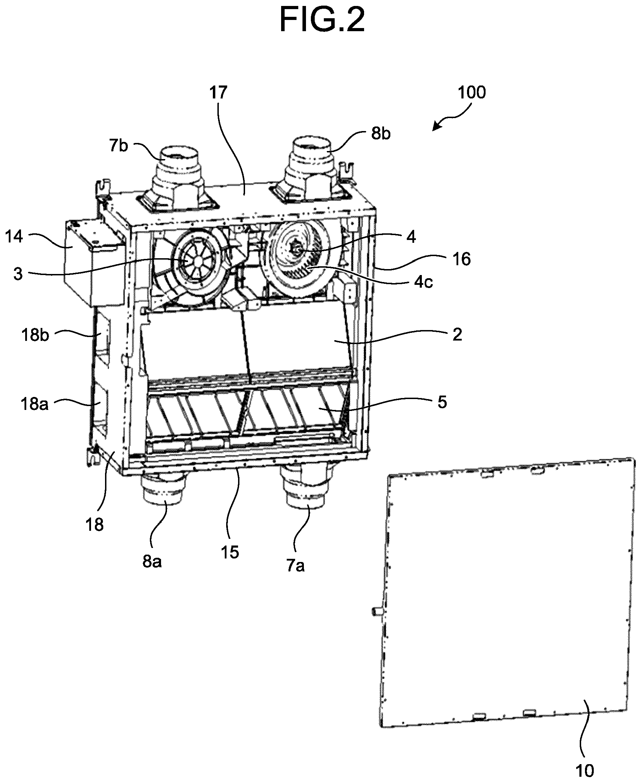

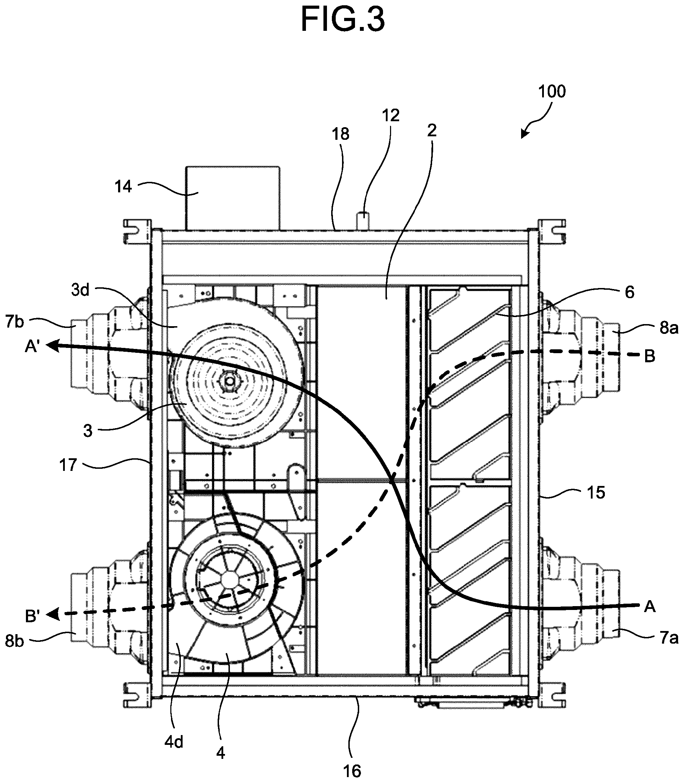

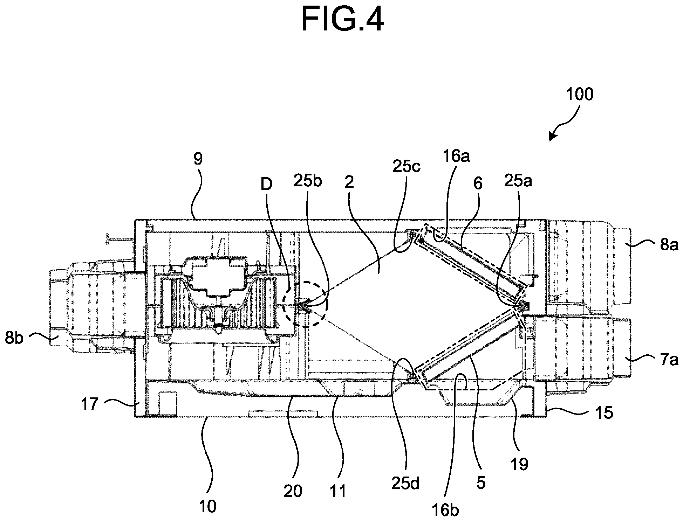

FIG. 1 is an exploded perspective view of a heat-exchange type ventilation apparatus according to a first embodiment of the present invention as viewed from the top surface side. FIG. 2 is an exploded perspective view of the heat-exchange type ventilation apparatus according to the first embodiment as viewed from the bottom surface side. FIG. 3 is a plan view of the heat-exchange type ventilation apparatus according to the first embodiment. FIG. 4 is a cross-sectional view of the heat-exchange type ventilation apparatus according to the first embodiment as viewed from the side thereof.

A heat-exchange type ventilation apparatus 100 according to the first embodiment includes a housing 1, which is a main body; a heat exchanger 2, an air supplying fan 3; an air discharging fan 4; a supply air filter 5; and a discharge air filter 6. The housing 1 includes an exterior-side inlet portion 7a; an interior-side inlet portion 8a; an interior-side outlet portion 7b; and an exterior-side outlet portion 8b formed therein. A supply air path that connects the exterior-side inlet portion 7a and the interior-side outlet portion 7b is formed in the housing 1. A discharge air path that connects the interior-side inlet portion 8a and the exterior-side outlet portion 8b is also formed in the housing 1.

The air supplying fan 3 is placed in the supply air path. The air supplying fan 3 generates a supply airflow that causes supply air that is outside air admitted through the exterior-side inlet portion 7a into the supply air path to flow out through the interior-side outlet portion 7b.

The air discharging fan 4 is placed in the discharge air path. The air discharging fan 4 generates a discharge airflow that causes discharge air that is inside air admitted through the interior-side inlet portion 8a into the discharge air path to flow out through the exterior-side outlet portion 8b.

The heat exchanger 2 is placed at the intersection portion of the supply air path and the discharge air path in the housing 1 and allows heat exchange between the supply airflow and the discharge airflow. The heat-exchange type ventilation apparatus 100 is a ventilation apparatus that provides ventilation while allowing heat exchange between the supply airflow and the discharge airflow.

The housing 1 includes six surfaces, i.e., a top plate 9, a bottom plate 10 opposite the top plate 9, and four side plates 15 to 18 closing the spaces between the top plate 9 and the bottom plate 10. The side plate 15 includes the exterior-side inlet portion 7a and the interior-side inlet portion 8a placed therein. The side plate 17, which is opposite the side plate 15, includes the interior-side outlet portion 7b and the exterior-side outlet portion 8b placed therein. In this case, as illustrated in FIG. 3, the path passing from the exterior-side inlet portion 7a through the heat exchanger 2 to the air supplying fan 3 is the supply air path A-A', and the path passing from the interior-side inlet portion 8a through the heat exchanger 2 to the air discharging fan 4 is the discharge air path B-B'. The air supplying fan 3 and the air discharging fan 4 are disposed downstream of the heat exchanger 2 in their respective paths.

A control circuit 14 is attached to the side plate 18. As illustrated in FIG. 2, the side plate 18 has an opening 18a and an opening 18b, which can be used as ports to admit air into the discharge air path B-B', in addition to the interior-side inlet portion 8a. The opening 18a is connected upstream of the heat exchanger 2 and thus the air admitted from the opening 18a is discharged through the heat exchanger 2. The opening 18b is connected downstream of the heat exchanger 2 and thus the air admitted from the opening 18b is discharged without going through the heat exchanger 2. Consequently, when a duct in communication with the room is connected to the opening 18b, inside air is discharged without going through the heat exchanger 2 and thus heat exchange is not performed. It is possible to reduce the pressure loss needed for the air to pass through the heat exchanger 2 although heat exchange is not performed between inside air and outside air. In this manner, the load on the air discharging fan 4 can be reduced and thereby the power consumption can be reduced. As illustrated in FIG. 1, the side plate 16, which is opposite the side plate 18, has openings 16a and 16b, which are insertion apertures. The supply air filter 5 and the discharge air filter 6 can be inserted into the housing 1 through the openings 16a and 16b. Because maintenance can be performed on both of the supply air filter 5 and the discharge air filter 6 from one direction of the side plate 16, ease of cleaning can be improved.

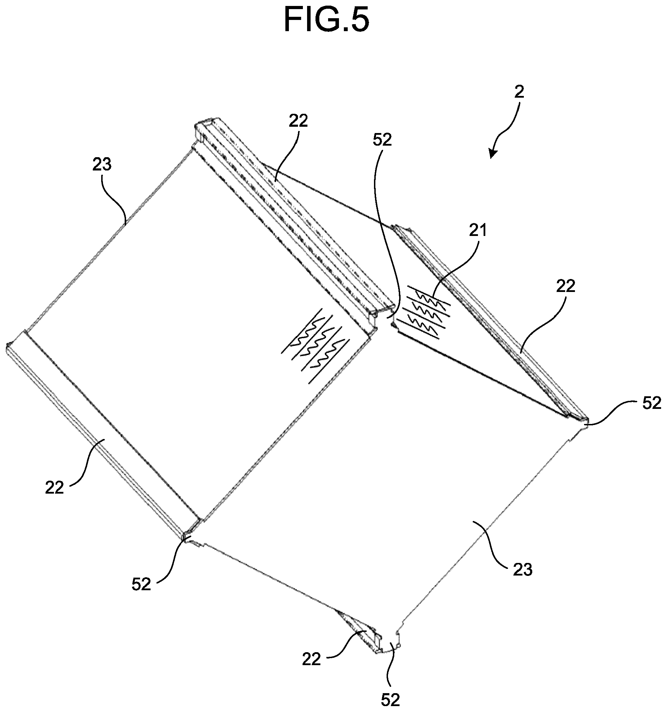

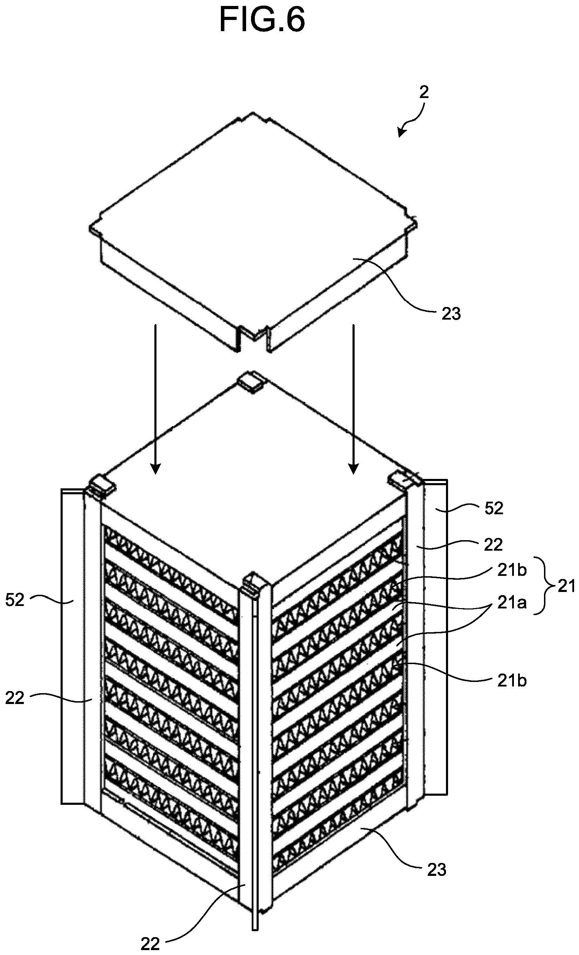

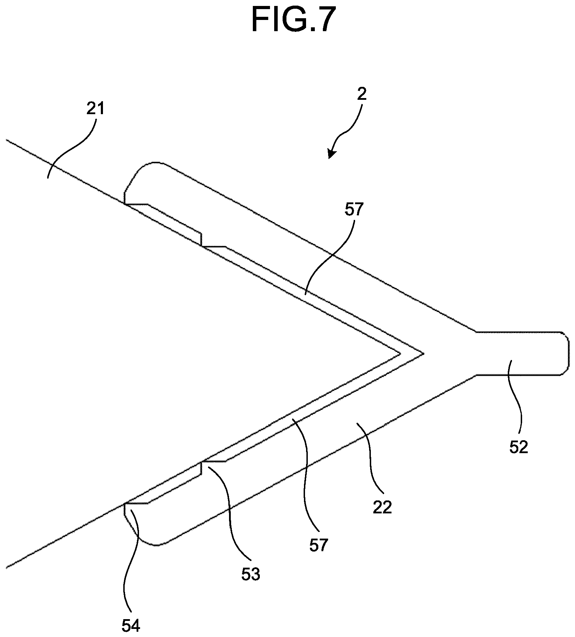

FIG. 5 is a perspective view of the heat exchanger 2 according to the first embodiment. FIG. 6 is an exploded perspective view of the heat exchanger 2 according to the first embodiment. FIG. 7 is a partially enlarged cross-sectional view of a corner portion of the heat exchanger 2 according to the first embodiment.

The heat exchanger 2 includes a heat exchange element 21, frame members 22, and end face members 23. The heat exchange element 21 is formed, for example, by alternately stacking partition members 21a, each of which is made from paper and has a sheet-like and polygonal shape, and spacing members 21b, each of which is made from paper and has a wave-like shape. In the first embodiment, the partition members 21a and the spacing members 21b have a square shape as viewed from the stacking direction of the partition members 21a. The heat exchange element 21 formed by stacking the partition members 21a and the spacing members 21b has a cuboid shape. The stacking direction of the partition members 21a is simply referred to as the stacking direction in the description hereinafter. The stacking direction corresponds to a direction orthogonal to the vertical direction of the housing 1, which is the main body.

Spaces between the partition members 21a, which are spaced by the spacing members 21b, provide flow paths through which air can pass. By causing the supply airflow to pass through a flow path on one side of each of the partition members 21a and causing the discharge airflow to pass through a flow path on the other side thereof, the heat exchange element 21 can perform total heat exchange, sensible heat exchange, or latent heat exchange between the supply airflow and the discharge airflow via each of the partition members 21a. Use of paper for the partition members 21a and the spacing members 21b enables a reduction in material cost. Additionally, condensate generated when the heat exchange is performed is retained in the partition members 21a and the spacing members 21b, which are made from paper; therefore, blockage of the flow paths due to formation of ice can be reduced. The edges of the heat exchange element 21 that extend in the stacking direction are each covered by the frame member 22.

The frame members 22 cover the ridge portions of the edges of the heat exchange element 21 that extend in the stacking direction. As illustrated in FIGS. 5 and 7, each of the frame members 22 has an L-like shape in a section and faces two of the side surfaces of the heat exchange element 21 that extend from the ridge portions of the heat exchange element 21 that extend in the stacking direction. The surface of each frame member 22 opposite the surface thereof that faces the heat exchange element 21 has an outer protrusion 52 formed thereon that extends in the stacking direction.

The surface of each frame member 22 that faces the heat exchange element 21 has inner protrusions 53 and 54 formed thereon that extend in the stacking direction. The inner protrusion 53 and the inner protrusion 54 are formed on the surface of each frame member 22 that faces one of the surfaces of the heat exchange element 21 and they are spaced apart from each other in a direction perpendicular to the stacking direction. Because each frame member 22 faces two of the surfaces of the heat exchange element 21, two each of the inner protrusions 53 and the inner protrusions 54 are formed on each frame member 22. The inner protrusions 53 and 54 abut on the side surfaces of the heat exchange element 21 or dig into the side surfaces of the heat exchange element 21.

As illustrated in FIG. 6, the end face members 23 cover the end surfaces of the heat exchange element 21 in the stacking direction. The end face members 23 are elastic bodies having airtightness to prevent air from leaking from the heat exchange element 21 to the end surface sides. Each of the end face members 23 is an airtight gasket having a thickness and thus air is prevented from leaking with ease even when the heat exchanger 2 has contracted.

With reference back to FIGS. 1 to 4, the bottom plate 10 includes a drain pan 11 on the inner surface side, and the drain pan 11 includes a drain port 12. The drain pan 11 includes a supply-air-side drain pan 19 to retain water resulting from condensation, due to the heat exchanger 2 or the like, of moisture contained in the air admitted through the exterior-side inlet portion 7a. The drain pan 11 also includes a discharge-air-side drain pan 20 to retain water such as condensate generated when the heat exchanger 2 performs heat exchange between air admitted through the interior-side inlet portion 8a and air admitted through the exterior-side inlet portion 7a. The discharge-air-side drain pan 20 is in communication with the drain port 12; therefore, drain water can be discharged. If the amount of water retained in the supply-air-side drain pan 19 is large, a water path may be included to achieve passage to the discharge-air-side drain pan 20.

The heat exchanger 2 is inserted into the housing 1 through an opening generated by removing the drain pan 11. The heat exchanger 2 is placed in the housing 1 such that one edge of the heat exchanger 2 that extends in the stacking direction and the diagonally opposite edge of the heat exchanger 2 are lined up vertically. By placing the heat exchanger 2 in such a manner, the area of heat exchange of the heat exchanger 2 can be used effectively and thereby an enhancement in thermal exchange efficiency can be achieved.

The housing 1 has support recess portions 25a to 25d formed therein to support the heat exchanger 2. The support recess portions 25a to 25d are grooves that extend in the stacking direction of the partition members 21a as placed in the housing 1.

The air supplying fan 3 and the air discharging fan 4 are placed on one side of the heat exchanger 2 in the housing 1. The positions of the air supplying fan 3 and the air discharging fan 4 are downstream of the heat exchanger 2 in the supply air path and the discharge air path, respectively. The air supplying fan 3 and the air discharging fan 4 are placed in the housing 1 next to each other in the stacking direction of the partition members 21a such that their inlet ports 3c and 4c are oriented in opposite directions to each other and their outlet ports 3d and 4d are oriented in the same direction. This placement can reduce the housing 1 in size in the height direction.

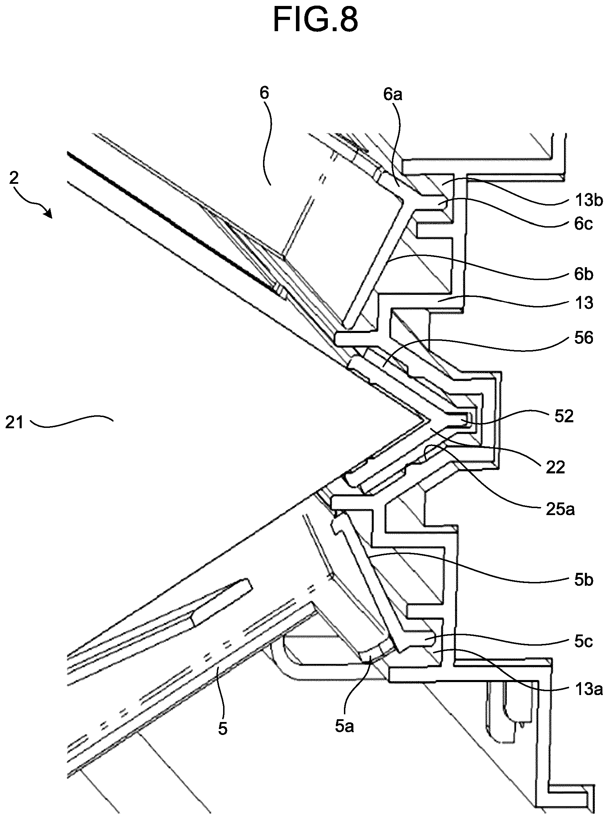

FIG. 8 is a partially enlarged cross-sectional view of a corner portion of the heat exchanger 2 accommodated in the housing 1 in the heat-exchange type ventilation apparatus 100 according to the first embodiment. In FIG. 8, the corner portion of the heat exchanger 2 on the side of the supply air filter 5 and the discharge air filter 6 in the housing 1 is enlarged.

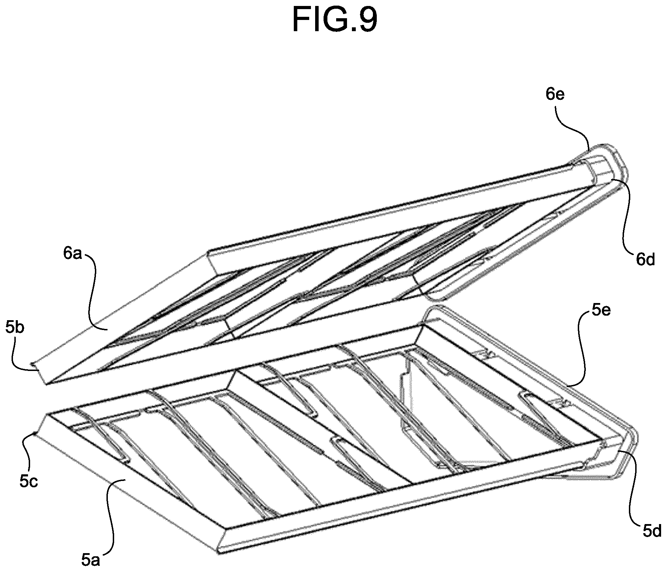

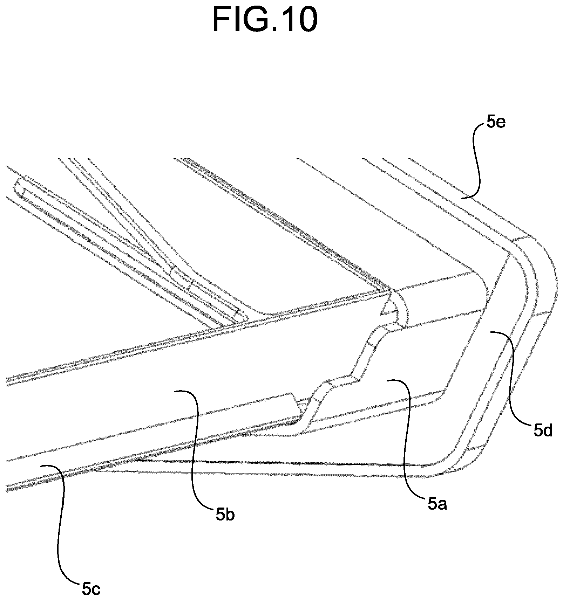

FIG. 9 is a perspective view of a supply air filter frame 5a included in the supply air filter 5 and a discharge air filter frame 6a included in the discharge air filter 6 according to the first embodiment. FIG. 10 is a partially enlarged perspective view of the supply air filter frame 5a according to the first embodiment. The supply air filter 5 and the discharge air filter 6 include the supply air filter frame 5a and the discharge air filter frame 6a, which function as filter cases that retain the filter main bodies formed from a nonwoven fabric or the like.

The supply air filter 5 is, as illustrated in FIG. 1, inserted into the housing 1 through the opening 16b, which is formed in the housing 1, to abut on the surface of the heat exchanger 2 that is located on the upstream side in the supply air path as illustrated in FIG. 4. The discharge air filter 6 is, as illustrated in FIG. 1, inserted into the housing 1 through the opening 16a, which is formed in the housing 1, to abut on the surface of the heat exchanger 2 that is located on the upstream side in the discharge air path as illustrated in FIG. 4.

As illustrated in FIG. 8, a rib frame body 13 that supports the supply air filter 5 and the discharge air filter 6 is formed in the housing 1. A facing surface 5b of the supply air filter frame 5a that faces the rib frame body 13 has a frame protrusion 5c that is a protrusion extending in the stacking direction formed thereon. A facing surface 6b of the discharge air filter frame 6a that faces the rib frame body 13 has a frame protrusion 6c that is a protrusion extending in the stacking direction formed thereon.

Of the support recess portions 25a to 25d that support the heat exchanger 2, the support recess portion 25a is formed in the rib frame body 13. The outer protrusion 52 formed on one of the frame members 22 of the heat exchanger 2 is fitted in the support recess portion 25a. The heat exchanger 2 is positioned in the housing 1 when the outer protrusion 52 is fitted in the support recess portion 25a. As illustrated in FIG. 8, a seal material 56 may be interposed between the support recess portion 25a and the outer protrusion 52.

The rib frame body 13 has filter-frame guide recess portions 13a and 13b that extend in the stacking direction formed therein such that the support recess portion 25a is located between the filter-frame guide recess portions 13a and 13b. As illustrated in FIG. 8, the frame protrusion 5c, which is formed on the supply air filter frame 5a, and the frame protrusion 6c, which is formed on the discharge air filter frame 6a, are fitted in the filter-frame guide recess portions 13a and 13b, respectively. By fitting the frame protrusions 5c and 6c in the filter-frame guide recess portions 13a and 13b and sliding the supply air filter 5 and the discharge air filter 6, insertion and removal of the supply air filter 5 and the discharge air filter 6 in the stacking direction is guided. In this way, the supply air filter 5 and the discharge air filter 6 can be inserted and removed stably. Additionally, the supply air filter 5 and the discharge air filter 6 are positioned in the housing 1 and are supported when the frame protrusions 5c and 6c are fitted in the filter-frame guide recess portions 13a and 13b.

As illustrated in FIG. 9, the supply air filter frame 5a and the discharge air filter frame 6a respectively include a supply-air-filter sealing surface portion 5d and a discharge-air-filter sealing surface portion 6d to provide sealing between the supply air filter frame 5a and the discharge air filter frame 6a and the side plate 16 of the housing 1. As illustrated in FIGS. 9 and 10, in order to further improve the airtightness, the supply-air-filter sealing surface portion 5d has a rib-like protrusion 5e and the discharge-air-filter sealing surface portion 6d has a protrusion 6e. As illustrated in FIG. 1, a supply-air filter grip 5f and a discharge-air filter grip 6f that are detachable and serve as parts to be held when the filters 5 and 6 are inserted and removed are included in the supply air filter frame 5a and the discharge air filter frame 6a, respectively.

The opening 16b, which is formed in the side plate 16, has an opening portion larger than the opening 16a so that insects and dust to be collected in the housing 1 can be cleaned from the housing 1. As illustrated in FIG. 1, the supply-air-filter sealing surface portion 5d has such a trapezoidal shape as to fit the shape of the opening 16b.

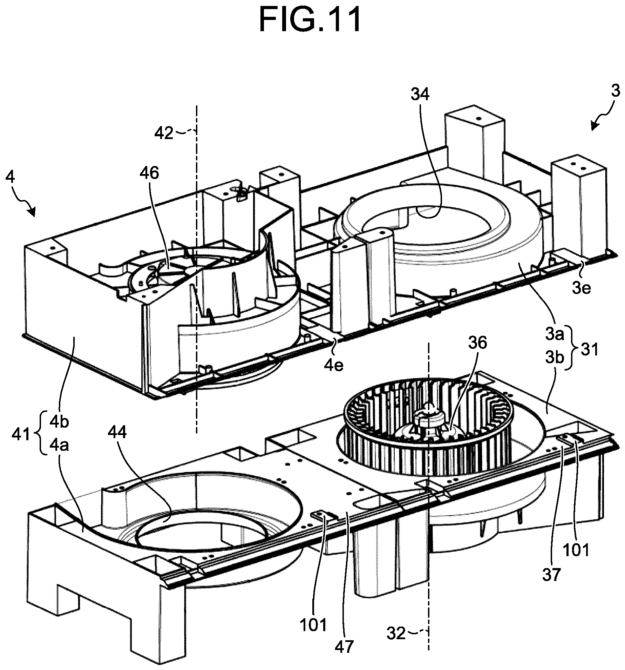

Of the support recess portions 25a to 25d, the support recess portion 25b, which is placed on the side of the air supplying fan 3 and the air discharging fan 4, is formed at the air supplying fan 3 and the air discharging fan 4. FIG. 11 is an exploded perspective view of the air supplying fan 3 and the air discharging fan 4 in the heat-exchange type ventilation apparatus 100 according to the first embodiment.

A casing 31 of the air supplying fan 3 includes an inlet-side casing 3a, which is a first casing, and a motor casing 3b, which is a second casing, and the inlet-side casing 3a and the motor casing 3b are splitting casings that can be split from each other in a direction along a rotation axis 32 of a motor 36 at a splitting plane that is orthogonal to the rotation axis 32. The casing 31 is configured by combining the inlet-side casing 3a and the motor casing 3b. The inlet-side casing 3a includes an inlet portion 34 formed therein. The motor casing 3b is fixed to the housing 1 with screws. The inlet-side casing 3a is fixed to the motor casing 3b with screws.

A casing 41 of the air discharging fan 4 includes an inlet-side casing 4a, which is a first casing, and a motor casing 4b, which is a second casing, and the inlet-side casing 4a and the motor casing 4b are splitting casings that can be split from each other in a direction along a rotation axis 42 of a motor 46 at a splitting plane that is orthogonal to the rotation axis 42. The casing 41 is configured by combining the inlet-side casing 4a and the motor casing 4b. The inlet-side casing 4a includes an inlet portion 44 formed therein. The inlet-side casing 4a is fixed to the housing 1 with screws. The motor casing 4b is fixed to the inlet-side casing 4a with screws.

The inlet-side casing 3a of the air supplying fan 3 and the inlet-side casing 4a of the air discharging fan 4 are components having an identical shape. The motor casing 3b of the air supplying fan 3 and the motor casing 4b of the air discharging fan 4 are components having an identical shape. That is, the casing 31 of the air supplying fan 3 and the casing 41 of the air discharging fan 4 are components having an identical shape. In this manner, the number of components can be reduced and manufacturing costs can be suppressed.

The air supplying fan 3 and the air discharging fan 4 are placed next to each other such that the rotation axis 32 and the rotation axis 42 are parallel with each other and the inlet portions 34 and 44 face in opposite directions.

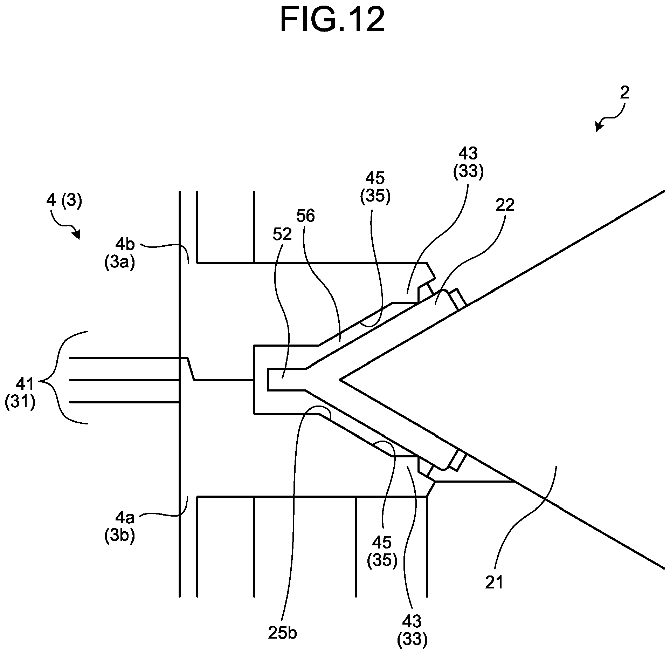

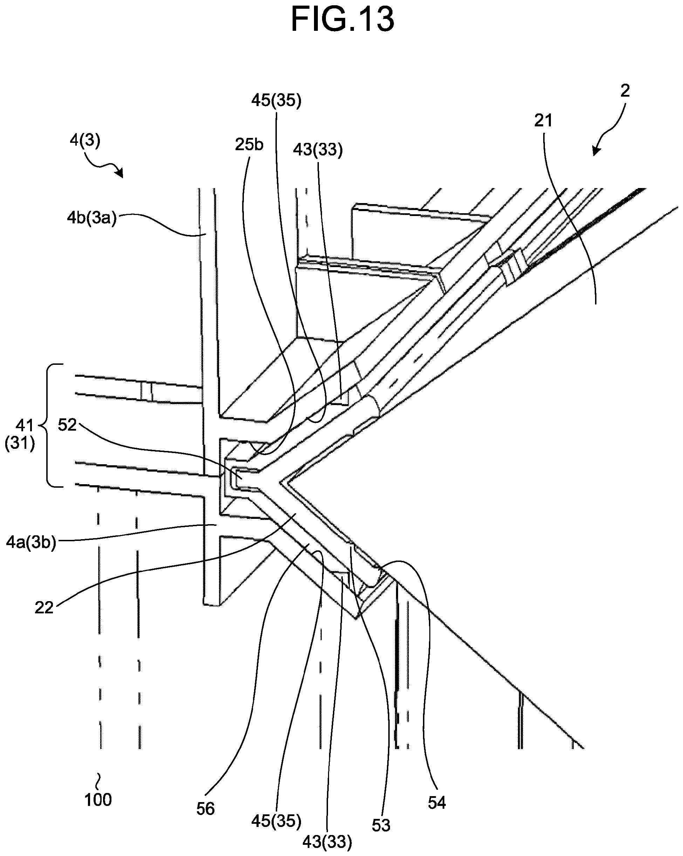

FIG. 12 is a partially enlarged cross-sectional view of a portion D illustrated in FIG. 4. FIG. 13 is a partially enlarged perspective view of the portion D illustrated in FIG. 4. The splitting plane between the inlet-side casing 4a and the motor casing 4b of the casing 41 of the air discharging fan 4 abuts on one of the edge portions of the heat exchanger 2 that extend in the stacking direction. The support recess portion 25b is formed at the splitting plane between the inlet-side casing 4a and the motor casing 4b. This means that the casing 41 of the air discharging fan 4 can be split into the inlet-side casing 4a and the motor casing 4b at its portion of the support recess portion 25b. In the support recess portion 25b, inclined surfaces 45 are formed that extend outward from the splitting plane between the inlet-side casing 4a and the motor casing 4b and face each other. The support recess portion 25b is formed by the inclined surfaces 45, which face each other, by combining the inlet-side casing 4a and the motor casing 4b. The support recess portion 25b, which is formed by the inclined surfaces 45, is a V-shaped groove forming an angle less than 180°. The inclined surfaces 45, which form inner wall surfaces of the support recess portion 25b, have protrusions 43 extending in the stacking direction.

As is the case with the casing 41 of the air discharging fan 4, the splitting plane between the inlet-side casing 3a and the motor casing 3b of the casing 31 of the air supplying fan 3 abuts on one of the edge portions of the heat exchanger 2 that extend in the stacking direction. The support recess portion 25b is formed at the splitting plane between the inlet-side casing 3a and the motor casing 3b. The inlet-side casing 3a and the motor casing 3b have inclined surfaces 35 that face each other at the splitting plane. The support recess portion 25b is formed by the inclined surfaces 35, which face each other, by combining the inlet-side casing 3a and the motor casing 3b. The support recess portion 25b, which is formed by the inclined surfaces 35, is a V-shaped groove forming an angle less than 180°. The inclined surfaces 35, which form inner wall surfaces of the support recess portion 25b, have protrusions 33 extending in the stacking direction.

One of the frame members 22 and the corresponding one of the outer protrusions 52 of the heat exchanger 2 are fitted in the support recess portion 25b. The seal material 56 is interposed between the support recess portion 25b and the frame member 22. If a partition wall is placed between the air supplying fan 3 and the air discharging fan 4, and the heat exchanger 2, the support recess portion 25b may be formed in the partition wall.

Because the casings 31 and 41 are fixed to the housing 1, when the frame member 22 and outer protrusion 52 of the heat exchanger 2 are fitted in the support recess portion 25b, the casings 31 and 41 support the heat exchanger 2 such that one edge portion of the heat exchanger 2 is sandwiched between the inclined surfaces 35 and between the inclined surfaces 45. More specifically, the heat exchanger 2 is fixed by the protrusions 33 of the inclined surfaces 35 and the protrusions 43 of the inclined surfaces 45 sandwiching the frame member 22 of the heat exchanger 2.

The support recess portion 25c is formed on the top plate 9 side of the heat exchanger 2 in the housing 1, for example, in the top plate 9, although detailed illustration is omitted. The support recess portion 25d is formed on the bottom plate 10 side of the heat exchanger 2 in the housing 1, for example, in the drain pan 11. As in the case with the support recess portions 25a and 25b, the outer protrusions 52 of the frame members 22 are fitted in the support recess portions 25c and 25d. Additionally, the seal material 56 may be interposed between the support recess portion 25c and the corresponding one of the outer protrusions 52 and between the support recess portion 25d and the corresponding one of the outer protrusions 52. The inner wall surfaces of the support recess portions 25c and 25d may have protrusions extending in the stacking direction.

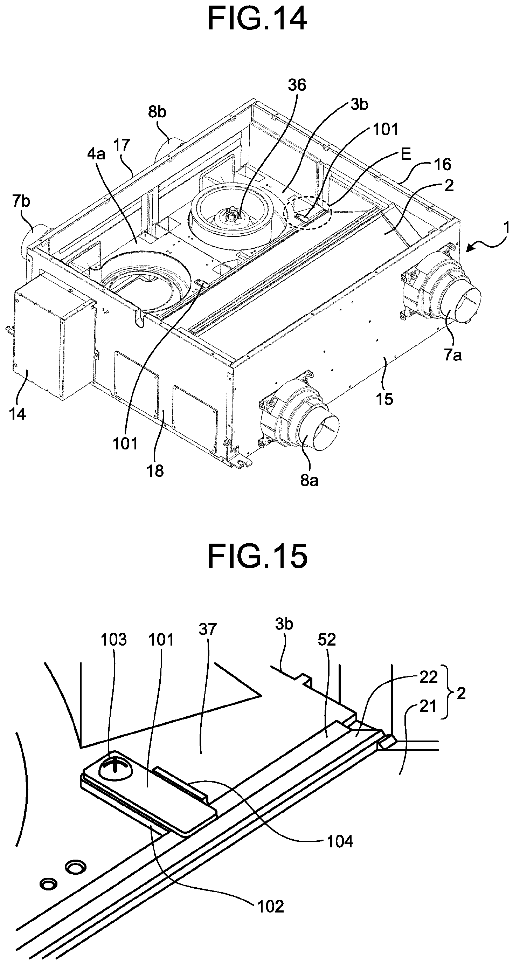

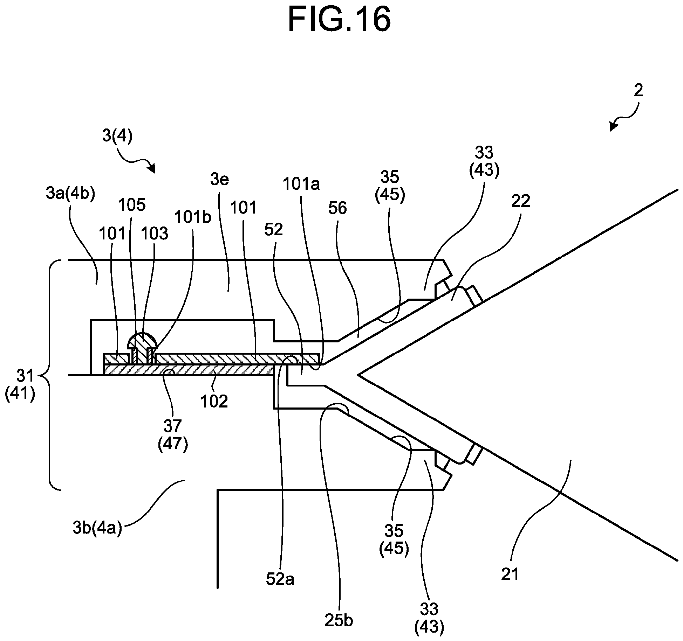

Next, the structure for supporting the heat exchanger 2 by the casing of the air supplying fan 3 and the casing of the air discharging fan 4 in the first embodiment will be described. FIG. 14 is a perspective view of the heat-exchange type ventilation apparatus 100 in the first embodiment, where the bottom plate 10, the inlet-side casing 3a, and the motor casing 4b are removed, as viewed from the bottom plate 10 side. FIG. 15 is a partially enlarged perspective view of a portion E illustrated in FIG. 14. FIG. 16 is a partially enlarged cross-sectional view of the portion E illustrated in FIG. 14.

As illustrated in FIGS. 14 to 16, the motor casing 3b is provided with a support 101 to support the heat exchanger 2 in an outer edge area 37, which is a boundary area with the support recess portion 25b, which is a V-shaped groove, at the splitting plane. The support 101 is formed of a flat-plate-shaped fitting. The outer edge area 37 is an area that is closer to the motor 36 than the inclined surfaces 35 at the splitting plane of the motor casing 3b and is parallel to the plane direction of the bottom plate 10. In other words, the outer edge area 37 is inward of the support recess portion 25b, which is a V-shaped groove at the splitting plane of the motor casing 3b.

The support 101 is placed on the upper surface of a seat 102 provided in the outer edge area 37 and is fixed to the seat 102 with a screw 103 so as to prevent the removal of the support 101 from the seat 102. The support 101 is placed on the upper surface of the seat 102 so as to adjust the position of a facing surface 101a of the support 101 facing the outer protrusion 52 of the frame member 22 in a direction parallel to the rotation axis 32 of the motor 36. Hereinafter, the direction parallel to the rotation axis 32 of the motor 36 is simply referred to as a rotation axis direction. The rotation axis direction corresponds to the vertical direction of the main body. The thickness of the seat 102 is adjusted to such a size that the position of the facing surface 101a of the support 101 in the rotation axis direction coincides with the position of a facing surface 52a of the outer protrusion 52. Consequently the support 101 can be placed in a suitable position in the rotation axis direction without being constrained by the position of the outer edge area 37.

The support 101 holds and supports the heat exchanger 2 from the bottom side. More specifically, the support 101 abuts on the surface of the outer protrusion 52 of the frame member 22 of the heat exchanger 2 on the inlet-side casing 3a side so as to hold and support the outer protrusion 52 from the bottom side. Thus, when the bottom plate 10, the inlet-side casing 3a, and the motor casing 4b are removed from the heat-exchange type ventilation apparatus 100 installed on the ceiling with the bottom plate 10 facing downward, the support 101 holds and supports the heat exchanger 2 from the bottom side; therefore, the heat exchanger 2 can be prevented from moving downward. That is, when the bottom plate 10, the inlet-side casing 3a, and the motor casing 4b are removed, the support 101 together with the support recess portion 25a holds and supports the heat exchanger 2 from the bottom side; therefore, the heat exchanger 2 can be prevented from moving downward.

The facing surface 101a of the support 101 has a shape matching the facing surface 52a of the outer protrusion 52. Thus, it is possible to ensure a large contact area between the facing surfaces of the support 101 and the outer protrusion 52 of the frame member 22; therefore, the heat exchanger 2 can be reliably supported by the support 101.

When the heat exchanger 2 is supported by the support 101, the longitudinal direction of the support 101 is orthogonal to the stacking direction. In contrast, by turning the support 101 around the screw 103, the support 101 can be moved to the position in which the support 101 does not overlap the one edge portion in the plane direction of the upper surface of the housing 1, i.e., the plane direction of the top plate 9. That is, by turning the support 101 around the screw 103 such that the support 101 and the outer protrusion 52 do not face each other, the supporting of the heat exchanger 2 by the support 101 is released; therefore, the heat exchanger 2 can be removed from the housing 1. That is, by turning the support 101, the heat exchanger 2 is easily switched between the state in which it is supported by the support 101 and the state in which it is not supported by the support 101.

The support 101 has a flat-plate shape. The material and size of the support 101 are not particularly limited. It is satisfactory if the material and size of the support 101 are appropriately determined such that the support 101 can have enough strength to support the heat exchanger 2 without causing the heat exchanger 2 to move downward even when the bottom plate 10, the inlet-side casing 3a, and the motor casing 4b are removed from the heat-exchange type ventilation apparatus 100 that is installed on the ceiling.

The number of supports 101 placed in the outer edge area 37 is not particularly limited either. It is satisfactory if the number of supports 101 placed is appropriately determined such that they can have enough strength to support the heat exchanger 2 without causing the heat exchanger 2 to move downward even when the bottom plate 10, the inlet-side casing 3a, and the motor casing 4b are removed from the heat-exchange type ventilation apparatus 100 that is installed on the ceiling.

The material and size of the screw 103 are not particularly limited. It is satisfactory if the material and size of the screw 103 are appropriately determined such that the screw 103 can have enough strength to support the heat exchanger 2 without causing the heat exchanger 2 to move downward even when the bottom plate 10, the inlet-side casing 3a, and the motor casing 4b are removed from the heat-exchange type ventilation apparatus 100 that is installed on the ceiling.

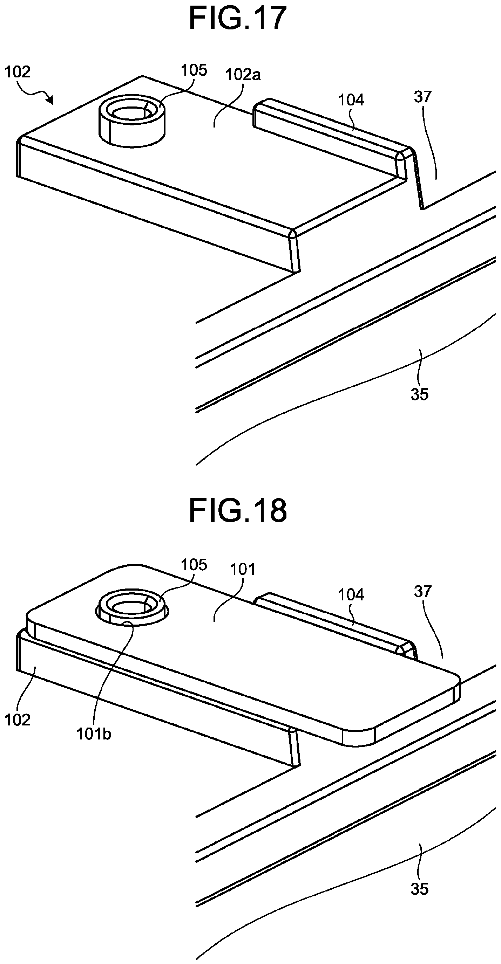

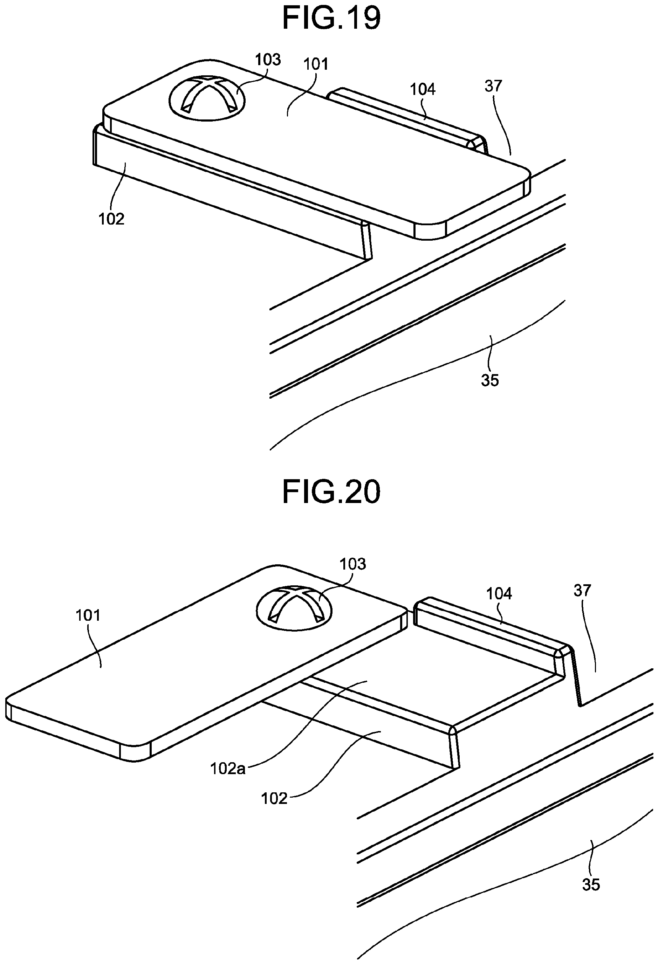

FIG. 17 is a perspective view illustrating the seat 102 of the motor casing 3b in the first embodiment. FIG. 18 is a perspective view illustrating the state where the support 101 is placed on the seat 102 of the motor casing 3b in the first embodiment. FIG. 19 is a perspective view illustrating the state where the support 101 of the motor casing 3b in the first embodiment is placed in position to support the heat exchanger 2 and is fixed with the screw 103. FIG. 20 is a perspective view illustrating the state where the support 101 of the motor casing 3b in the first embodiment is placed in position not to support the heat exchanger 2 and is fixed with the screw 103.

The seat 102 includes, in the outer edge area of the upper surface of the seat 102, an anti-turn portion 104 sticking out upward from the upper surface and extending in a direction orthogonal to the stacking direction. Because the anti-turn portion 104 is provided on the upper surface of the seat 102, the support 101 can be prevented from turning excessively when the screw 103 is turned.

The seat 102 has a cylindrical protrusion 105 on an upper surface 102a. The support 101 has a circular opening 101b extending through in the thickness direction. With the protrusion 105 fitting in the opening 101b, the screw 103 is inserted into the hollow in the protrusion 105. Consequently, the support 101 can be fixed to the seat 102 such that the support 101 is sandwiched between the lower such that the support 101 is sandwiched between the lower surface of the head of the screw 103 and the upper surface 102a of the seat 102.

Here, by providing the cylindrical protrusion 105 having a thickness greater than the thickness of the support 101, a space can be generated between the support 101 and the upper surface 102a of the seat 102 when the heat-exchange type ventilation apparatus 100 is installed on the ceiling. That is, because the screw 103 does not touch the support 101, the support 101 is not firmly sandwiched between the lower surface of the screw 103 and the upper surface 102a of the seat 102 and thus the support 101 can be turned. Further, the friction of the support 101 when the support 101 is turned can be limited to only the friction between the support 101 and the lower surface of the head of the screw 103. Thus, the support 101 can be easily turned.

A storage 3e to store the support 101 is provided in the inlet-side casing 3a in an area opposite the support 101 so that the support 101 does not interfere with the inlet-side casing 3a when the inlet-side casing 3a and the motor casing 3b are combined. The storage 3e preferably has such a shape that the storage 3e interferes with the support 101 when the support 101 is not supporting the heat exchanger 2. Consequently, when the casing 31 is assembled, it is possible to prevent supporting of the heat exchanger 2 by the support 101 from being forgotten.

Although the structure for supporting the heat exchanger 2 by the motor casing 3b has been described, the inlet-side casing 4a of the casing 41 of the air discharging fan 4 likewise includes the support 101, the seat 102, the screw 103, the anti-turn portion 104, and the protrusion 105 in an outer edge area 47, which is a boundary area with the support recess portion 25b, which is a V-shaped groove, at the splitting plane. The outer edge area 47 is an area that is closer to the motor 46 than the inclined surfaces 45 at the splitting plane of the inlet-side casing 4a and is parallel to the plane direction of the bottom plate 10. In other words, the outer edge area 47 is inward of the support recess portion 25b, which is a V-shaped groove at the splitting plane of the inlet-side casing 4a. Thus, the inlet-side casing 4a can support the support 101 in a similar manner to the motor casing 3b.

The motor casing 4b has a storage 4e corresponding to the storage 3e. The outer edge area 47 is an area that is closer to the motor 46 than the inclined surfaces 45 at the splitting plane of the inlet-side casing 4a and is a splitting plane that is parallel to the plane direction of the bottom plate 10. In other words, the heat-exchange type ventilation apparatus 100 has the structure for supporting the heat exchanger 2 that includes the support 101, the seat 102, the screw 103, the anti-turn portion 104, and the protrusion 105 in the split casing placed on the upper surface side of the housing 1, which is the main body.

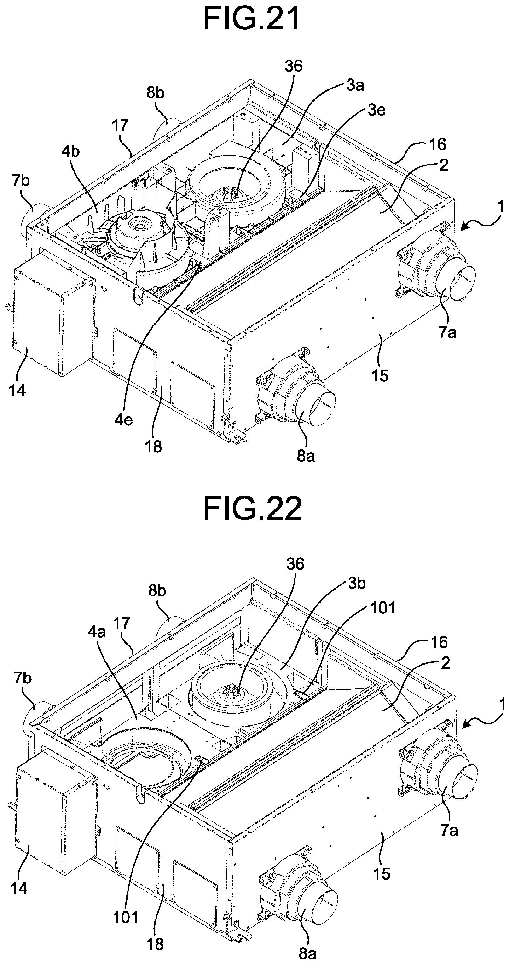

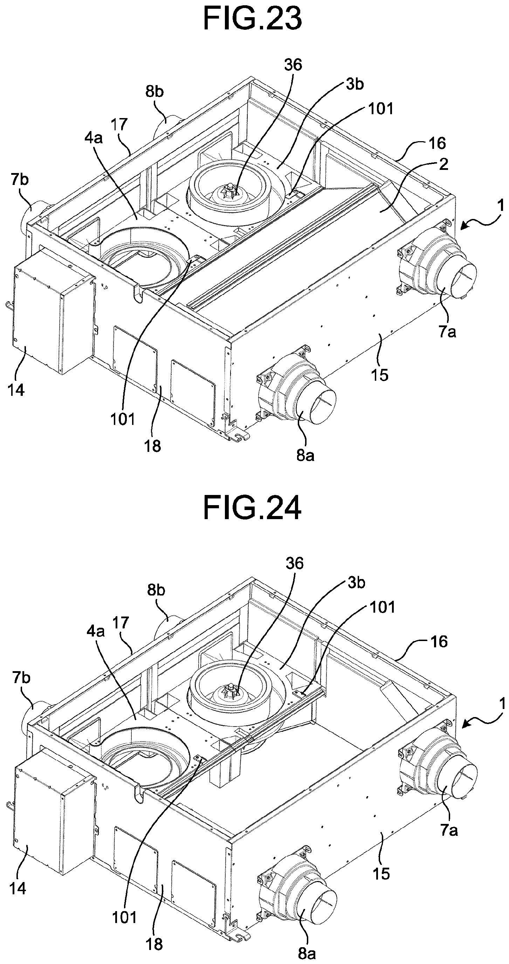

Next, a description will be given of the procedure of checking parts to be maintained, such as the motors 36 and 46 of the air supplying fan 3 and the air discharging fan 4, after the heat-exchange type ventilation apparatus is installed on the ceiling of a building. FIG. 21 is a perspective view of the heat-exchange type ventilation apparatus 100 in the first embodiment, where the bottom plate 10 is removed, as viewed from the bottom side. FIG. 22 is a perspective view of the heat-exchange type ventilation apparatus 100 in the first embodiment, where the bottom plate 10, the inlet-side casing 3a, and the motor casing 4b are removed, as viewed from the bottom side. FIG. 23 is a perspective view of the heat-exchange type ventilation apparatus 100 in the first embodiment, where the supporting of the heat exchanger 2 by the support 101 is released, as viewed from the bottom side. FIG. 24 is a perspective view of the heat-exchange type ventilation apparatus 100 in the first embodiment, where the bottom plate 10, the inlet-side casing 3a, the motor casing 4b, and the heat exchanger 2 are removed, as viewed from the bottom side.

As illustrated in FIG. 21, first, the bottom plate 10 is removed from the heat-exchange type ventilation apparatus 100. At this point in time, because the casings 31 and 41 are fixed to the housing 1, the frame member 22 and the outer protrusion 52 of the heat exchanger 2 are fitted in the support recess portion 25b and thus the casings 31 and 41 support the heat exchanger 2 such that one edge portion of the heat exchanger 2 is sandwiched between the inclined surfaces 35 and between the inclined surfaces 45. That is, the heat exchanger 2 is fixed by the protrusions 33 of the inclined surfaces 35 and the protrusions 43 of the inclined surfaces 45 sandwiching the frame member 22 of the heat exchanger 2.

Next, as illustrated in FIG. 22, the casings located on the bottom plate 10 side of the casings 31 and 41, i.e., the inlet-side casing 3a and the motor casing 4b are removed. At this point in time, the fixing of the heat exchanger 2 by the casings 31 and 41 is released.

Meanwhile, the heat exchanger 2 is supported by the support 101 of the motor casing 3b of the casing 31 and the support 101 of the inlet-side casing 4a of the casing 41. In other words, the heat exchanger 2 is held and supported by the two supports 101 and the support recess portion 25a from the bottom plate 10 side so that the heat exchanger 2 is prevented from moving downward. Thus, even if the heat-exchange type ventilation apparatus 100 becomes larger and the heat exchanger 2 thus becomes heavier, the inlet-side casing 3a and the motor casing 4b can be removed to check motors and the like without holding the heat exchanger 2. Therefore, the efficiency of checking operation can be improved.

When the heat exchanger 2 needs to be removed, as illustrated in FIG. 23, by turning the supports 101, e.g., 90 degrees around the screws 103 so that the supports 101 and the outer protrusion 52 do not face each other, the supporting of the heat exchanger 2 by the supports 101 is released. Thus, as illustrated in FIG. 24, the heat exchanger 2 can be removed from the housing 1.

In the heat-exchange type ventilation apparatus 100 described above, the inner protrusions 53 and 54, which are formed on the frame members 22, are in line contact with the heat exchange element 21; thus, this is less likely to form a gap than a case in which the frame members 22 are in surface contact with the heat exchange element 21, and thereby airtightness can be improved. Additionally, as illustrated in FIG. 7, by interposing a seal material 57 in a gap between each of the frame members 22 and the heat exchange element 21, airtightness can be further improved.

Furthermore, the inner protrusions 53 and 54 can be used as marks indicative of an application area over which the seal material 57 is applied. Additionally, the inner protrusions 53 and 54 can be used as walls to prevent the seal material 57 from leaking from the gap between each of the frame members 22 and the heat exchange element 21. In particular, the inner protrusions 54, which are placed on the end portion sides of the inner protrusions 53 on each of the frame members 22, tend to function as walls to prevent the seal material 57 from leaking. By forming the inner protrusions 54 as end-portion-side protrusions on the end portions of each of the frame members 22, the inner protrusions 54 can function as walls to prevent the leaking more reliably. The number of inner protrusions formed on the surface of each frame member 22 that faces one of the surfaces of the heat exchange element 21 may be one, or may be three or more.

Additionally, the fitting structure in which the outer protrusions 52 of the frame members 22 are fitted in the support recess portions 25a to 25d can achieve an improvement in airtightness between the heat exchanger 2 and the housing 1. Furthermore, even when the heat exchanger 2 has contracted due to deterioration over time, the airtightness between the heat exchanger 2 and the housing 1 is maintained as long as the outer protrusions 52 are fitted in the support recess portions 25a to 25d. That is, even when the heat exchanger 2 has contracted, the airtightness is maintained with ease. Moreover, even when the dimensions of the heat exchanger 2 vary due to manufacturing errors, the airtightness between the heat exchanger 2 and the housing 1 is maintained as long as the degree of variation is such that the outer protrusions 52 are allowed to be fitted in the support recess portions 25a to 25d. Moreover, by interposing the seal material 56 between the outer protrusions 52 and the support recess portions 25a to 25d, the airtightness is maintained further reliably when the heat exchanger 2 has contracted. Furthermore, when the outer protrusions 52 are fitted in the support recess portions 25a to 25d in greater depths, the airtightness can be maintained even when the heat exchanger 2 has a greater contraction.

Furthermore, as long as the outer protrusions 52 are fitted in the support recess portions 25a to 25d, shifting in position of the heat exchanger 2 and falling of the heat exchanger 2 in the housing 1 can be prevented even when the heat exchanger 2 has contracted. Additionally, the frame members 22 reinforce the heat exchanger 2; thus, the product life can be extended.

Additionally, the frame protrusion 5c, which is formed on the supply air filter frame 5a, and the frame protrusion 6c, which is formed on the discharge air filter frame 6a, are fitted in the filter-frame guide recess portions 13a and 13b; thus, such a fitting structure can achieve an improvement in airtightness between the supply air filter frame 5a and the discharge air filter frame 6a, and the housing 1. In this way, air can be prevented from passing through the supply air path and the discharge air path without going through the supply air filter 5 and the discharge air filter 6.

The heat exchanger 2 is supported by the support 101 of the motor casing 3b of the casing 31 and the support 101 of the inlet-side casing 4a of the casing 41; therefore, the heat exchanger 2 is reliably prevented from moving downward. Thus, even if the heat-exchange type ventilation apparatus 100 becomes larger and the heat exchanger 2 thus becomes heavier, the inlet-side casing 3a and the motor casing 4b can be removed to check motors and the like without holding the heat exchanger 2. Thus, the efficiency of checking operation can be improved. Therefore, the maintainability of parts to be maintained of the air supplying fan 3 and the air discharging fan 4 can be improved.

### Reference Signs List

1 housing, 2 heat exchanger, 3 air supplying fan, 3a inlet-side casing, 3b motor casing, 3c, 4c inlet port, 3d, 4d outlet port, 3e storage, 4 air discharging fan, 4a inlet-side casing, 4b motor casing, 4e storage, 5 supply air filter, 5a supply air filter frame, 5b facing surface, 5c frame protrusion, 5d supply-air-filter sealing surface portion, 5e protrusion, 5f supply-air filter grip, 6 discharge air filter, 6a discharge air filter frame, 6b facing surface, 6c frame protrusion, 6d discharge-air-filter sealing surface portion, 6e protrusion, 6f discharge-air filter grip, 7a exterior-side inlet portion, 7b interior-side outlet portion, 8a interior-side inlet portion, 8b exterior-side outlet portion, 9 top plate, 10 bottom plate, 11 drain pan, 12 drain port, 13 rib frame body, 13a, 13b filter-frame guide recess portion, 14 control circuit, 15, 16, 17, 18 side plate, 16a, 16b opening, 18a, 18b opening, 19 supply-air-side drain pan, 20 discharge-air-side drain pan, 21 heat exchange element, 21a partition member, 21b spacing member, 22 frame member, 23 end face member, 25a, 25b, 25c, 25d support recess portion, 31, 41 casing, 32, 42 rotation axis, 33, 43 protrusion, 34, 44 inlet portion, 35, 45 inclined surface, 36, 46 motor, 37, 47 outer edge area, 52 outer protrusion, 52a facing surface, 53, 54 inner protrusion, 56, 57 seal material, 100 heat-exchange type ventilation apparatus, 101 support, 101a facing surface, 101b opening, 102 seat, 102a upper surface, 103 screw, 104 anti-turn portion, 105 protrusion.

## Claims

1. A heat-exchange type ventilation apparatus (100) comprising:
a box-shaped main body (1) in which a discharge air path to discharge inside air to outdoors and a supply air path to supply outside air to indoors are formed;
an air supplying fan (3) placed in the supply air path;
an air discharging fan (4) placed in the discharge air path; and
a heat exchanger (2) placed in the main body (1) to allow heat exchange between air passing through the supply air path and air passing through the discharge air path, the heat exchanger (2) including a plurality of sheet-like and polygonal shaped partition members (21a) stacked with spacing therebetween in a direction orthogonal to a vertical direction of the main body (1), wherein
the air supplying fan (3) and the air discharging fan (4) are placed next to each other in a stacking direction of the partition members (21a) in the main body (1) and abut on one edge portion of the heat exchanger (2) extending in the stacking direction,
the air supplying fan (3) and the air discharging fan (4) have a groove (25b) extending in the stacking direction and sandwiching the one edge portion between two facing inner surfaces on a portion in which the air supplying fan (3) and the air discharging fan (4) abut on the heat exchanger (2),
the air supplying fan (3) and the air discharging fan (4) include a casing (31, 41) capable of being split into two split casings (3a, 3b, 4a, 4b) in a vertical direction of the main body at the groove (25b) as a center, the two split casings (3a, 3b, 4a, 4b) including a first casing (3a, 4a) having an inlet portion (34, 44) formed therein and a second casing (3b, 4b) to be combined with the first casing (3a, 4a),
**characterized by** a split casing (3a, 3b, 4a, 4b) that is included in the two split casings (3a, 3b) of the air supplying fan (3) and the two split casings (4a, 4b) of the air discharging fan (4) and is placed on an upper surface side of the main body (1) includes a support (101) extending from an area of the splitting plane inward of the groove (25b) to the one edge portion of the heat exchanger (2) so as to be able to support the one edge portion from a bottom side of the main body (1).

2. The heat-exchange type ventilation apparatus (100) according to claim 1, wherein the support (101) is capable of moving to a position in which the support (101) does not overlap the one edge portion in a plane direction of the upper surface of the main body (1).

3. The heat-exchange type ventilation apparatus (100) according to claim 1 or 2, further comprising a seat (102) to cause a position of a facing surface (101a) of the support (101) facing the one edge portion to coincide with a position of the one edge portion on the upper surface side of the main body (1) in the vertical direction of the main body (1), wherein
the support (101) is placed on the seat (102).

4. The heat-exchange type ventilation apparatus (100) according to claim 3, wherein
the seat (102) includes a cylindrical protrusion (105) with a thickness greater than a thickness of the support (101) on an upper surface of the seat (102),
the support (101) has a circular opening (101b) extending therethrough in a thickness direction, and
a screw (103) with which the support (101) is fixed to the seat (102) with the protrusion (105) fitting in the opening (101b) is provided.

## Patentansprüche

1. Wärmetauscherbelüftungsvorrichtung (100), die Folgendes umfasst:
einen kastenförmigen Hauptkörper (1), in dem ein Luftaustrittpfad, um Innenluft nach außen abzulassen, und ein Luftzufuhrpfad, um Außenluft nach innen zuzuführen, ausgebildet sind;
ein Luftzufuhrgebläse (3), das in dem Luftzufuhrpfad platziert ist;
ein Luftaustrittgebläse (4), das in dem Luftaustrittpfad platziert ist; und
einen Wärmetauscher (2), der in dem Hauptkörper (1) platziert ist, um einen Wärmeaustausch zwischen Luft, die durch den Luftzufuhrpfad strömt, und Luft, die durch den Luftaustrittpfad strömt, zu ermöglichen, wobei der Wärmetauscher (2) eine Vielzahl von plattenähnlichen und polygonal geformten Trennelementen (21a) umfasst, die mit dazwischen ausgebildeten Abständen in einer zu einer vertikalen Richtung des Hauptkörpers (1) orthogonal verlaufenden Richtung gestapelt sind, wobei
das Luftzufuhrgebläse (3) und das Luftaustrittgebläse (4) nebeneinander in einer Stapelrichtung der Trennelemente (21a) in dem Hauptkörper (1) platziert sind und mit einem Kantenabschnitt des Wärmetauschers (2) in Anlage sind, der sich in Stapelrichtung erstreckt,
wobei das Luftzufuhrgebläse (3) und das Luftaustrittgebläse (4) eine Vertiefung (25b) aufweisen, die sich in Stapelrichtung erstreckt und den einen Kantenabschnitt zwischen zwei einander zugewandten Innenflächen eines Abschnitts, in dem das Luftzufuhrgebläse (3) und das Luftaustrittgebläse (4) mit dem Wärmetauscher (2) in Anlage sind, sandwichartig einschließen,
wobei das Luftzufuhrgebläse (3) und das Luftaustrittgebläse (4) ein Gehäuse (31, 41) umfassen, das in zwei geteilte Gehäuse (3a, 3b, 4a, 4b) in einer vertikalen Richtung des Hauptkörpers an der Vertiefung (25b) als Mittelpunkt teilbar ist, wobei die beiden geteilten Gehäuse (3a, 3b, 4a, 4b) ein erstes Gehäuse (3a, 4a) mit einem darin ausgebildeten Einlassabschnitt (34, 44) und ein zweites Gehäuse (3b, 4b), das mit dem ersten Gehäuse (3a, 4a) kombiniert werden kann, umfassen,
**gekennzeichnet durch** ein geteiltes Gehäuse (3a, 3b, 4a, 4b), das in den beiden geteilten Gehäusen (3a, 3b) des Luftzufuhrgebläses (3) und den beiden geteilten Gehäusen (4a, 4b) des Luftaustrittgebläses (4) beinhaltet ist, und das auf einer oberen Flächenseite des Hauptkörpers (1) platziert ist, das eine Stütze (101) beinhaltet, die sich von einem Bereich der Teilungsebene ins Innere der Vertiefung (25b) zu dem einen Kantenabschnitt des Wärmetauschers (2) erstreckt, um den einen Kantenabschnitt von einer Unterseite des Hauptkörpers (1) zu stützen.

2. Wärmetauscherbelüftungsvorrichtung (100) nach Anspruch 1, wobei die Stütze (101) in eine Position bewegt werden kann, in der die Stütze (101) den einen Kantenabschnitt in einer Ebenenrichtung der oberen Fläche des Hauptkörpers (1) nicht überlagert.

3. Wärmetauscherbelüftungsvorrichtung (100) nach Anspruch 1 oder 2, die außerdem einen Sitz (102) umfasst, der dazu führt, dass eine Position einer Stirnfläche (101a) der Stütze (101), die dem einen Kantenabschnitt zugewandt ist, mit einer Position des einen Kantenabschnitts auf der oberen Flächenseite des Hauptkörpers (1) in der vertikalen Richtung des Hauptkörpers (1) übereinstimmt, wobei
die Stütze (101) auf dem Sitz (102) platziert ist.

4. Wärmetauscherbelüftungsvorrichtung (100) nach Anspruch 3, wobei der Sitz (102) einen zylinderförmigen Vorsprung (105) mit einer Dicke umfasst, die größer als die Dicke der Stütze (101) auf einer oberen Fläche des Sitzes (102) ist,
wobei die Stütze (101) eine kreisförmige Öffnung (101b) aufweist, die sich durch diese hindurch in eine Dickenrichtung erstreckt, und
eine Schraube (103) bereitgestellt ist, mit der die Stütze (101) an dem Sitz (102) fixiert ist, wobei der Vorsprung (105) in die Öffnung (101b) eingepasst ist.

## Revendications

1. Appareil de ventilation de type à échange de chaleur (100) comprenant :
un corps principal en forme de boîte (1) dans lequel un trajet d'évacuation d'air pour évacuer de l'air intérieur vers l'extérieur et un trajet d'alimentation d'air pour alimenter de l'air extérieur vers l'intérieur sont formés ;
un ventilateur d'alimentation d'air (3) placé dans le trajet d'alimentation d'air ;
un ventilateur d'évacuation d'air (4) placé dans le trajet d'évacuation d'air ; et
un échangeur de chaleur (2) placé dans le corps principal (1) pour permettre un échange de chaleur entre de l'air passant à travers le trajet d'alimentation d'air et de l'air passant à travers le trajet d'évacuation d'air, l'échangeur de chaleur (2) incluant une pluralité d'éléments de séparation (21a) en forme de feuille et de polygone empilés avec un espacement entre eux dans une direction orthogonale à une direction verticale du corps principal (1), dans lequel
le ventilateur d'alimentation d'air (3) et le ventilateur d'évacuation d'air (4) sont placés l'un à côté de l'autre dans une direction d'empilement des éléments de séparation (21a) dans le corps principal (1) et viennent en butée sur une certaine partie de bord de l'échangeur de chaleur (2) s'étendant dans la direction d'empilement,
le ventilateur d'alimentation d'air (3) et le ventilateur d'évacuation d'air (4) ont une rainure (25b) s'étendant dans la direction d'empilement et prenant en sandwich la certaine partie de bord entre deux surfaces internes opposées sur une partie dans laquelle le ventilateur d'alimentation d'air (3) et le ventilateur d'évacuation d'air (4) viennent en butée sur l'échangeur de chaleur (2),
le ventilateur d'alimentation d'air (3) et le ventilateur d'évacuation d'air (4) incluent un boîtier (31, 41) pouvant être divisé en deux boîtiers divisés (3a, 3b, 4a, 4b) dans une direction verticale du corps principal au niveau de la rainure (25b) en tant que centre, les deux boîtiers divisés (3a, 3b, 4a, 4b) incluant un premier boîtier (3a, 4a) présentant une partie d'entrée (34, 44) formée dans celui-ci et un second boîtier (3b, 4b) devant être combiné avec le premier boîtier (3a, 4a),
**caractérisé par** un boîtier divisé (3a, 3b, 4a, 4b) qui est inclus dans les deux boîtiers divisés (3a, 3b) du ventilateur d'alimentation d'air (3) et les deux boîtiers divisés (4a, 4b) du ventilateur d'évacuation d'air (4) et qui est placé sur un côté de surface supérieure du corps principal (1), qui inclut un support (101) s'étendant à partir d'une zone du plan de division vers l'intérieur de la rainure (25b) jusqu'à la certaine partie de bord de l'échangeur de chaleur (2) de manière à pouvoir supporter la certaine partie de bord à partir d'un côté inférieur du corps principal (1).

2. Appareil de ventilation de type à échange de chaleur (100) selon la revendication 1, dans lequel le support (101) est capable de se déplacer vers une position dans laquelle le support (101) ne chevauche pas la certaine partie de bord dans une direction plane de la surface supérieure du corps principal (1).

3. Appareil de ventilation de type à échange de chaleur (100) selon la revendication 1 ou 2, comprenant en outre un siège (102) pour amener une position d'une surface opposée (101a) du support (101) faisant face à la certaine partie de bord à coïncider avec une position de la certaine partie de bord sur le côté de surface supérieure du corps principal (1) dans la direction verticale du corps principal (1), dans lequel
le support (101) est placé sur le siège (102).

4. Appareil de ventilation de type à échange de chaleur (100) selon la revendication 3, dans lequel
le siège (102) inclut une saillie cylindrique (105) présentant une épaisseur supérieure à une épaisseur du support (101) sur une surface supérieure du siège (102),
le support (101) présente une ouverture circulaire (101b) s'étendant à travers celui-ci dans une direction d'épaisseur, et
une vis (103) à l'aide de laquelle le support (101) est fixé au siège (102) avec la saillie (105) s'adaptant dans l'ouverture (101b) est prévue.
